Europäisches Patentamt

European Patent Office

Office européen des brevets

(11) Publication number: **0 379 165**
A2

# EUROPEAN PATENT APPLICATION

(21) Application number: **90100901.9**

(22) Date of filing: **17.01.90**

(51) Int. Cl.5 **B23B 49/00, B23B 5/00, G02B 6/32, G01B 11/00**

(30) Priority: **20.01.89 IT 1914089**

(43) Date of publication of application:
**25.07.90 Bulletin 90/30**

(84) Designated Contracting States:
**CH DE ES FR GB LI**

(71) Applicant: **SOCIETA' CAVI PIRELLI S.p.A.**
**Piazzale Cadorna 5**
**I-20123 Milano(IT)**

(72) Inventor: **Ciboldi, Moreno**
**Via Genova, 9**
**Carate Brianza (MI)(IT)**
Inventor: **Maregatti, Ugo**
**Via Crocetta 6**
**Castell'Arquato (PC)(IT)**

(74) Representative: **Mariani, Giorgio, Dr. et al**
**INDUSTRIE PIRELLI S.p.A. Direzione Brevetti**
**Piazzale Cadorna, 5**
**I-20123 Milano(IT)**

(54) **Method and apparatus for manufacturing bodies provided at one of their ends with a surface of revolution having the axis aligned with a predetermined axis of said body.**

(57) Method for manufacturing a body provided at one of its ends with a surface of revolution having the axis aligned with a predetermined longitudinal axis of said body and in particular a ferrule (12) for expanded beam connectors (10) provided at one end with a taper cavity (30) whose axis is aligned with the axis of the through hole (16) wherein the end of an optical fiber (14) is housed.

The alignment of the axis of the surface of revolution, for instance the taper cavity (30) obtained by a turning operation at the end of the body, for instance a ferrule (12), with any predetermined axis of the body, for instance the axis of the through hole (16) for housing the optical fiber (14), being obtained by applying said body in a projecting manner on a rotating shaft (22) detecting the free oscillations at the end of said body (12) with respect to the predetermined axis of this latter and imposing on said body (12) opposed oscillations adjusted in phase and amplitude so as to eliminate substantially the said free oscillations and to obtain subsequently the surface (30) of revolution by a turning operation.

Fig.5

# METHOD AND APPARATUS FOR MANUFACTURING BODIES PROVIDED AT ONE OF THEIR ENDS WITH A SURFACE OF REVOLUTION HAVING THE AXIS ALIGNED WITH A PREDETERMINED AXIS OF SAID BODY

The present invention concerns a method and an apparatus for manufacturing in general bodies provided at one of their ends with a surface of revolution having the axis aligned with a predetermined longitudinal axis of said body.

In particular the present invention refers to a method and apparatus for realizing a ferrule for expanded beam connectors and precisely a ferrule provided at one end with a surface of revolution in the form of a taper cavity for housing a spheric lens whose axis is aligned with the axis of a through hole previously obtained and therefore predetermined in the ferrule where the end of an optical fiber is housed.

It happens that at present it is very difficult to act in such a way as to have the axis of a surface of revolution, obtained by a mechanical machining at or in the end of any whatsoever body, coincident with a predetermined longitudinal axis of said body.

Let consider for example the case in which a taper cavity is obtained by a turning operation on a ferrule provided with a through hole, so that the axes of the taper cavity and of the through hole coincide the one with the other applying said ferrule in a projecting manner on the mandrel placed at the end of the shaft of a lathe and obtaining said cavity by means of the action of a suitable tool.

In fact, the application of a body, as for example a ferrule, on the mandrel placed at the end of an unavoidably flexible rotating shaft, favours the oscillations in a plane perpendicular to the axis of the ferrule and the digging action of the tool intensifies said oscillations.

Therefore, unless using a machine tool of great value, arranging with great precision the ferrule in the mandrel and proceeding to the digging of said taper cavity very slowly to reduce to the minimum the oscillations produced in the ferrule itself, the axis of the taper cavity is more or less out of alignment with respect to the axis of the through cylindrical hole.

This misalignment leads, in the particular case of the ferrule of the type in question, to a reduction or to a direction deflection of the signal transmitted which sometimes can be intolerable.

The aim of the present invention is that of eliminating or at least reducing sufficiently the perpendicular oscillations of any whatsoever predetermined axis of a body to enable the axis of the surface of revolution by which one end of said body is shaped to get near and to line up as much as possible with the said predetermined axis of said body without making use of particularly precise and expensive machine tools.

In the particular case of the ferrules to which from now on reference will be mainly made, but this is not to be understood as a limiting example for the purposes of the present invention, it has to be stated beforehand that, owing to the very reduced diameter, of the order of the tenth of millimeter (the typical diameter is of 125 microns), said hole cannot be obtained by means of a common drilling technique, but it is obtained by forming said body or ferrule by means of a material synthetizable around a filiform core substantially of the same diameter as the through hole which is desired to obtain.

Therefore, it is understood how it is difficult to align the axis of a successive taper cavity with that of the through hole.

The object of the present invention is a method for manufacturing a body provided at one of its ends with a surface of revolution having the axis aligned with the predetermined longitudinal axis of said body, characterized by the fact that said alignment is obtained by applying in a projecting manner said body on a mandrel arranged at the end of a rotating shaft chosen between an elastically flexible shaft and an articulated shaft for the presence in the same of at least an elastic joint, letting freely oscillate the free end of said body where it is intended to obtain said surface of revolution and compensating the said free oscillations of said end with opposed oscillations imposed and adjusted at such an amplitude as to minimize or even substantially to eliminate said free oscillations.

Another object of the present invention is an apparatus for manufacturing a body provided at one end with a surface of revolution whose axis is aligned with a predetermined longitudinal axis of said body, characterized by the fact of comprising a mechanism (88) for the compensation of the oscillations to be applied around an assembly comprising a mandrel (52) at the end of a rotating shaft chosen between an elastically flexible shaft and an articulated shaft for the presence in the same of at least an elastic joint and a body (12) secured in a projecting manner on said mandrel, said mechanism (88) containing a bearing (110) surrounding a component of said assembly and a plurality of means (84, 88) generating oscillations and positioned against said bearing (110) guided by signals deriving from the rotation of the said assembly to provide phase and amplitude synchronization and compensation of the oscillations that the free end of said body (12) secured in a projecting manner on the mandrel suffers during its rotation to effect an operation according to a surface of revolution whose axis coincides with the predetermined axis of said body at one end of this latter.

The characteristics and qualities of the present invention will be better understood by the following detailed description of one embodiment, which is not to be considered as a limitative example, complete with the attached sheets of drawing in which:

FIGURE 1 - shows in axial section a portion of a component of the expanded beam connector for optical fibers comprising a ferrule realized according to the present invention;

FIGURE 2 - is a sectional view of a ferrule provided with a through hole for guiding and centering the optical fiber, to be used in figure 1, in a working step wherein the taper cavity apt to housing the spherical lens has not yet been made;

FIGURE 3 - is an axial sectional view of the same ferrule as in figure 2 after the final working step which has produced said taper cavity;

FIGURE 4 - is a schematic view of the assembly constituted by an optical fiber, a taper cavity and a spherical lens showing the drawbacks caused by a not perfect centering and alignment between the through hole housing the optical fiber and the taper cavity housing the spherical lens;

FIGURE 5 - shows schematically an apparatus according to the present invention to detect the oscillations of the free end of a ferrule and to compensate them so as to be of minimum amplitude to allow the realization of the taper cavity with tolerable centering and alignment errors;

FIGURE 6 - shows a principle block diagram of a circuit supplying control signals to electromechanical transducers used in the apparatus as shown in figure 5 to compensate the oscillations of the ferrule;

FIGURE 7 - is a graph showing in an elementary manner as the phase of a sinusoidal signal can be shifted;

FIGURE 8 - shows the shape of light spots, appearing on the screen detecting the light coming out of said through hole of the ferrule, in relation to the phase and amplitude adjustments given to the control signals of the electromechanical transducers;

FIGURE 9 - shows a block diagram of a digital circuit for displacing the phase and originating the synthetized sinusoidal signal;

FIGURE 10 - is a simplified diagram of an amplifier for guiding a piezoelectric transducer having a device for regulating the amplitude of the control signal and for regulating the polarization direct voltage of the piezoelectric transducer;

FIGURE 11 - shows a simplified diagram of an amplifier for guiding a magnetostrictive or magnetodynamic transducer having a device for regulating the amplitude of the control signal and for regulating the polarization direct current of the transducer.

The figures from 1 to 4 show an example of a component of an expanded beam connector for optical fibers and the drawback deriving from the centering and alignment defects of the optical fiber with respect to the spherical lens having the task of expanding said beam.

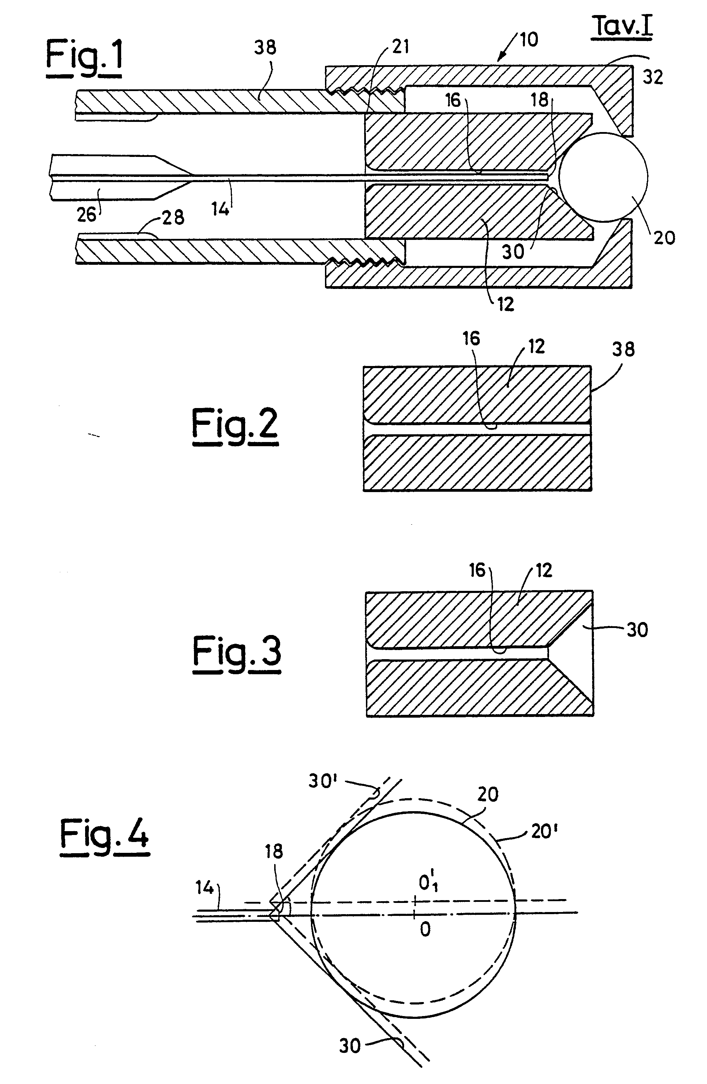

As visible particularly in figure 1, the portion of a component of a connector 10 here represented comprises a body or ferrule 12 of opaque material housing along its central axis an optical fiber 14 inside a through hole 16.

Said optical fiber 14 is positioned inside said body or ferrule 12 so that its end 18 falls substantially into the focus of a spherical lens 20.

In order to maintain the said end 18 of the optical fiber 14 in the focus of the spherical lens, it is necessary to bind, for instance by means of an adhesive 21, the optical fiber to the ferrule.

Always to maintain the end 18 of the optical fiber 14 in the focus of the spherical lens 20, this latter is laid down in a taper cavity 30 shaped in such a way that the end 18 of the fiber falls into the focus of the lens.

A substantially rigid cap 32 is screwed on the extremity of a tubular sleeve 38 in the cavity of which the end of the ferrule 12 is inserted with force, by pushing the spherical lens 20 against the taper cavity 30.

To understand particularly the problem to be faced in the particular case of a ferrule constituting only a non-limiting example for the purposes of the present invention, it is necessary to consider figures 2 and 3 representing a ferrule 12 in two successive working steps, and figure 4 showing the drawbacks deriving from the non alignment of the axis of the through hole wherein the optical fiber 14 is housed and that of the taper cavity 30.

In order to obtain the ferrule 12, as shown in figure 2, at first it is necessary to effect the through hole 16 which, owing to its very small diameter (of the order of the tenth of millimeter to house a typical optical fiber of 125 microns of diameter) requires the recourse to systems for moulding a raw body of material constituted by synthetizable particles around a rigid core having the shape of a thread, of diameter substantially equal to the diameter of the through hole 16, made up of a material resistant to the temperatures of the synthetization process, to be removed in the end by means of any chemical corrosion process, or the like.

Once the cylindrical body 12 has been obtained, as shown in figure 2, it is necessary to realize in its outer furthermost face 38 the taper cavity 30 suitable for housing a spherical lens, as shown in figure 3, for instance by means of a turning operation, by applying the ferrule 12 on the mandrel of the lathe shaft and digging the taper cavity 30 by advancing in axial sense a turning tool of type well known to the skilled in mechanical machinings.

At this point there is the problem of centering and aligning the axis of the taper cavity 30 with the axis of the through hole 16 and consequently substantially with the axis of the optical fiber 14.

Although the so small diameter of the through hole 16 does not allow an easy arrangement of a turning tool to have the axis of the taper cavity 30 coincident with the axis of the axial hole 16 it should be possible to reach said coincidence within sufficiently narrow tolerances, as far as the ferrule 12 is kept still. But when it is rotate, its end 39 wherein the cavity 30 is to be made begins to oscillate owing to very little unbalances or eccentricities either of the ferrule body or of the shaft on which it is assembled, causing periodic flexures of its axis so that the point of the turning tool is periodically out of alignment with respect to the axis of the ferrule 12.

Consequently, it is easy that the axis of the taper cavity 30 is in the end out of alignment with respect to the axial hole 16 of a distance of the order of about some tens of micron.

As shown in figure 4, the above said misalignment can have very serious consequences for the efficiency of the connector. In fact from the examination of the figure 4 it is noted that, if the taper cavity 30 has its vertex falling on the axis of the optical fiber 14 and its axis aligned and coincident with that of said fiber, the end 18 of the fiber 14 falls substantially into the focus of the lens 20 generating at the exit of this latter an expanded light beam whose direction coincides substantially with that of the axis of the fiber 14 and therefore of the connector.

Consequently, the light beam coming out of the spherical lens substantially does not come out laterally with respect to the axis of the connector as it can be picked up by a like connector component aligned and fixed before said component of connector 10.

Instead, if owing to flexural oscillations of the axis of the cylindrical body 12 during the formation of the taper cavity 30, this latter is formed on an axis out of alignment with respect to that of the optical fiber, assuming the position of the taper cavity 30′ represented by a dashed line, the spherical lens is in the position 20′ too, represented with a dashed line and the expanded light beam is no longer parallel to the axis of the optical fiber 14, but in a direction connecting the end 18 of the optical fiber with the center 0′ assumed by the spherical lens 20′ in the cavity 30′.

It follows that this error of alignment between the optical fiber 14 and the taper cavity 30 leads to such a deviation of direction of the expanded light beam as to be picked up only for a very little part or not at all by a like component of connector which faces the component of connector just dealt with hereinbefore.

From hence the need of reducing or eliminating completely the oscillations of the ferrule 12 while making the taper cavity 30 in order to avoid the serious consequences shown hereinbefore.

Problems of like seriousness, of which the case of the ferrule is only an example, can arise in general in all the cases in which it is indispensable to shape the end of any whatsoever body according to any whatsoever surface of revolution whose axis must be aligned in a precise manner with respect to any whatsoever predetermined axis of said body.

In order to eliminate the above said flexural oscillations, if it is wished not to make recourse to a machine particularly devoid of working vibrations and provided with exceptional possibilities of balancing or centering a piece during working fixed on one of its mandrels, it is necessary to apply to an apparatus for the compensation and elimination of said oscillations of the axis of the body or ferrule 12 so that the axis of the taper cavity 30 coincides substantially with that of the said body or ferrule and therefore with that of the optical fiber 14.

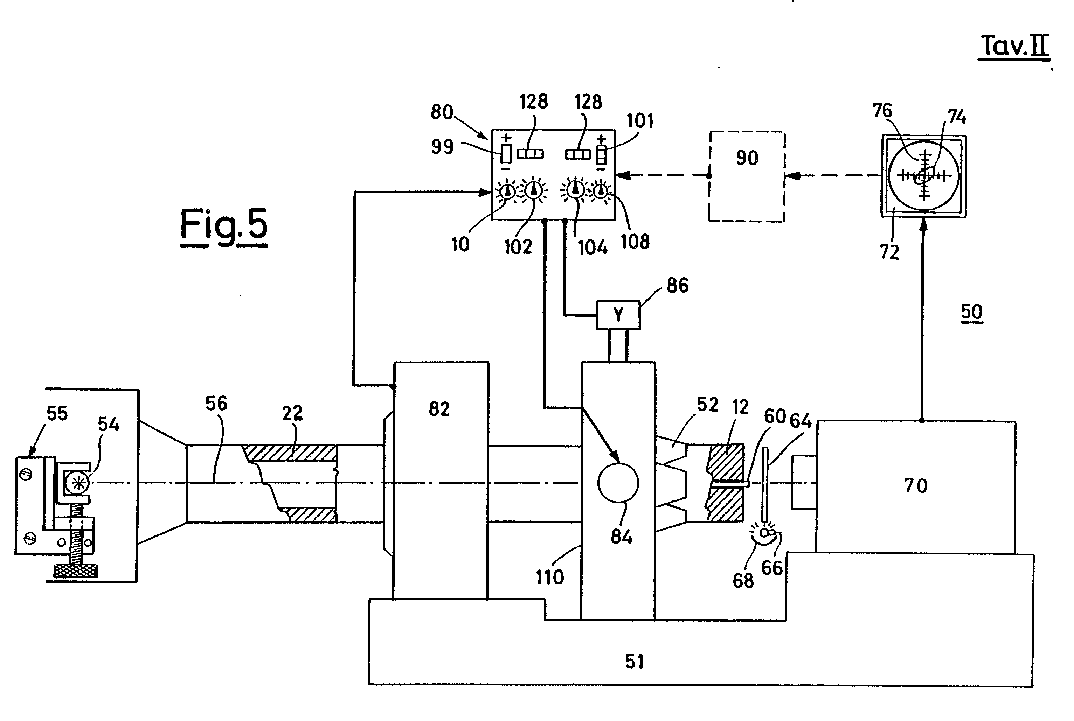

To this end, it is necessary to provide the apparatus 50 shown in figure 5 which comprises a lathe bench 51 on which there is, at the end of an elastically flexible rotating shaft 22, a mandrel 52 which grips a body or ferrule 12 for connectors of optical fibers substantially or approximately centered on its axis of rotation.

Inside the shaft 22 which is hollow and at the end of which the mandrel 52, hollow too, is secured, there is a strong light source 54, as a halogen-vapor incandescent lamp or a power light emitter diode (LED) fixed to an adjustable support 55, which emits a light ray propagating along the axis 56 of the shaft up to be incident on a light guide 58, inserted in the axial cylindrical hole 16, of which one end 60 comes out of the front face 62 of the body or ferrule 12.

Strictly speaking, this light guide 58 usually made up of a quite transparent plastic material, is not strictly necessary but guarantees always the coming out of a ray of light of the axial cylindrical hole even if the flexural oscillations of the same should be of such an amplitude as to make the two ends of the hole out of alignment up to prevent a light ray from coming out of the hole, remaining completely absorbed by its walls.

The light coming out of the end 60 of the light guide 58 is projected onto a semitransparent screen 64 on which a graduated reticle, possibly lightened laterally by a lamp 66 provided with a bent mirror 68 is provided.

The light projected onto the semitransparent screen 64 forms on the same an image that can be observed directly, or through an eyepiece or examined by a telecamera 70 which sends a signal to a display 72, as a cathode-ray tybe on which there appears a reproduction of the image 74 forming onto the semitransparent screen 64 as well as of the graduated reticle 76 to offer an enlarged representation of said image to an operator.

The image can be valued by an operator to have the opportunity for intervening on a control 80 having the task of acting on the compensating process of the flexural oscillations of the body or ferrule 12.

Said control 80 receives signals from a detector 82 of rotation of the cylindrical body 12 and sends the signals synchronized with said rotation to two electromechanical transducer 84 and 86 applied on the block 88 for the compensation of the oscillations.

Alternatively, the operator who acts on the control 80 can be substituted for a processor 90 that on the ground of the shape and dimensions of the image 74, or its corresponding signals, generates signals for controlling the device 80 that guides the electromechanical transducers 84 and 86.

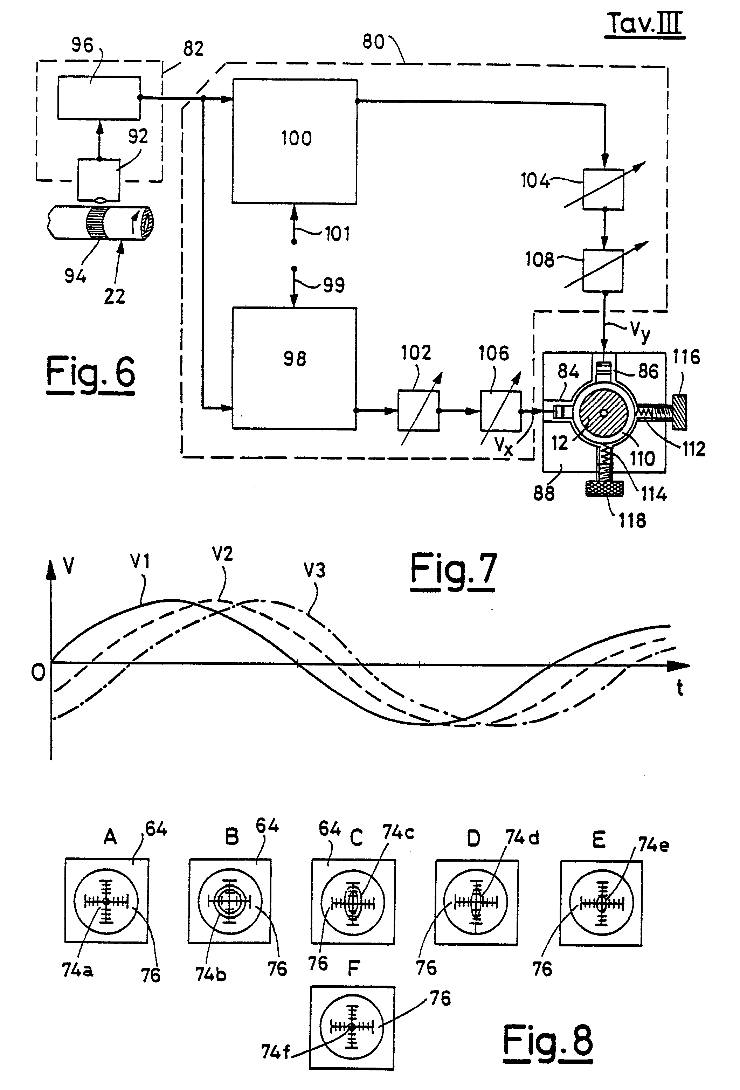

As shown in figure 6, the electric part of the apparatus 50 for the compensation of the oscillations consists of the rotating detector 82, constituted by an optical reader 92 which displays the passage before it of light lines alternated with dark lines on a strip 94 surrounding the shaft at the end of which there is a body or ferrule 12, and transmits signals to a shaping circuit 96 generating signals of frequency proportional to the frequency of the passage of the light and dark lines before the optical reader and of such a shape as to be accepted by the control 80.

This control contains two phase shifting nets 98 and 100 able to emit a signal of the same frequency and amplitude as the input signal, but with a phase that can be adjusted in advance or later by adjusting means 99 and 101 acting on said phase shifting nets obtaining an effect on the output signal like that shown in figure 7 which illustrates exactly three sinusoidal voltages $V_1$, $V_2$, and $V_3$ having always the same frequency, but phases shifted in time.

The signals coming out of the phase shifting nets 98 and 100 are transmitted to circuits 102 and 104, respectively, for adjusting the amplitude, and overlapped within circuits 106 and 108 having polarization continuous values that can be regulated for a purpose that will be disclosed hereinbefore.

The signals $V_x$ and $V_y$, respectively, coming out of the circuits 106 and 108, are transmitted to the electromechanical transducers 84 and 86 within the compensation block 88 which act on a bearing 100 kept centered and compensated by the springs 112 and 114, respectively, and the adjusting screws 116 and 118.

The images generated by the light coming out of the end 60 of the guide 58 and projected onto the semitransparent screen 64 are shown in figure 8.

When the body or ferrule 12 has been centered perfectly on the mandrel 52 and is not rotate, there appears on the screen 64 a light spot 74a as represented in figure 8a which has very small dimensions and can be led exactly at the cross of the graduated reticle 76 acting either on the springs 112 and 114 and the adjusting screws 116 and 118 of the compensating block 88 or on the polarization continuous values applied by the adjusters 106 and 108 to the electromechanical transducers 84 and 86, respectively.

Then the mandrel 52 is rotate and the image appearing on the screen 64 is observed.

If the body or ferrule 12 undergoes flexural oscillations of equal amplitude along two axes perpendicular to each other, the image on the screen 64 assumes the shape of a circle 74b as shown in figure 8B.

At this point the signals generated by the rotating detector 82 are picked up and it is necessary to act on one of the phase shifting nets, for example the net 98, changing by means of the control device 99 the phase of the signal up to the point in which an oscillation generated by the electromechanical transducer 84 has its phase opposed to the flexural oscillations of the shaft and therefore of the cylindrical body 12 along the same axis of the transducer.

The result is that the image 74c projected onto the screen 64, as shown in figure 8c, suffers a reduction of its dimensions along one of its axes, for instance the axis X assuming an elliptical shape whose smaller axis reaches a minimum when the phase of the vibration applied by the transducer 84 is opposed to that of the flexural oscillation.

At this point the amplitude adjuster 102 is made to act on the amplitude of the signal applied to the transducer 84 until the amplitude of the oscillations generated by said transducer is exactly equal and opposite that of the flexural oscillations of the cylindrical body 12 in direction of the same axis X.

As a consequence, the image reduces substantially to a straight line segment 74d along the axis Y, as indicated in figure 8D.

The same operations are repeated on the phase shifting net 100 through the adjusting means 101 up to reduce to the minimum the length of the straight line segment along the axis Y, as indicated in the image 74e in figure 8E and, regulating through the adjuster 104 the amplitude of the signal applied to the electromechanical transducer 86 there are applied to the shaft and consequently to the body or ferrule 12 opposite oscillations of phase and amplitude like those of its flexural oscillations along the axis Y obtaining as image a segment of minimum length 74f represented in figure 8F, substantially identical to the puntiform image 74a obtained on the screen 64 in absence of rotation of the mandrel 52.

At this point the compensating block 88 has compensated the oscillations of the body or ferrule 12 up to allow an intervention of a tool for effecting a taper cavity 30 in the body or ferrule with its axis centered and lined up within acceptable tolerances.

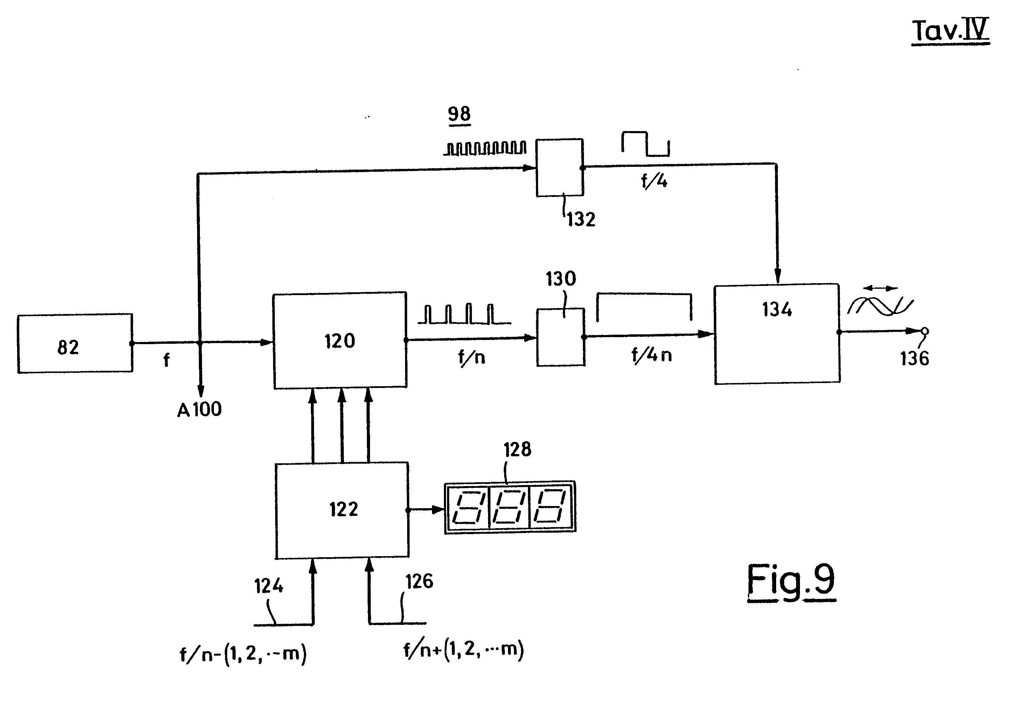

A particular phase shifting net of digital type is indicated in figure 9. Said phase shifting net, for example the phase shifting net 98, is constituted by a frequency dividing counter 120 receiving a signal from a rotating detector 82 at a frequency f.

This frequency divisor 120 is formed essentially by a multistage counter equipped with a logic net qualified for the extraction of signals and the cancellation of the counter in correspondence of a predetermined number of counts checked by a coder 122 controlled by an input 124 for reducing the divisor (for example if the usual divisor n should be the equal to 100, the input 124 would send division start commands for number below 100 as 99, 98, etc. to the coder 122) and by an input 126 for increasing the divisor (for example in this case the input 126 would send division start commands for numbers over 100 as 101, 102, etc. to the coder 122), the chosen divisor or a number connected to it being in case visualized by a numeric display 128.

The signal coming out of the frequency dividing counter 120 at the frequency f/n is now sent to a squaring and symmetrizing circuit 130 usually constituted by two cascade dividing by two divisor circuits which divide the frequency at a value f/4n producing square waves perfectly symmetrical i.e. with a lifetime of the high value exactly equal to lifetime of the low value.

Likewise, the same signal at the frequency f is reduced to the frequency f/4 by a squaring and symmetrizing circuit 132 constituted essentially as the squaring and symmetrizing circuit 130 producing square waves too perfectly symmetrical.

Said square waves at the respective frequencies of f/4n and f/4 are sent to a sine wave synthetizer 134 which, working with square waves having frequency ratios equals n (usually n is considered equals 100) generates an output sinusoidal signal 136 of frequency f/4n and of phase adjusted in advance or later depending on the fact that the division of the divisor 120 takes place by divisors less than n or greater than n.

In an actual example the frequency f, given by the rotation detector 82 is equals 400 times the frequency of rotation of the cylindrical body 12.

The divisor 120 usually divides the frequency by 100 (n = 100) unless the input 124 for reducing the divisor obliges to divide by lower numbers or the input 126 for increasing the divisor obliges to divide by higher numbers.

The signal coming out of the divisor 120, that usually is not symmetric in the lifetimes of the high and low values of the pulses, is made symmetric by the squaring and dividing by four divisor circuit 130, obtaining in the end a square wave signal at a frequency equal to f/400, i.e. at a frequency of one cycle for every turn of the cylindrical body 12, to be supplied at a first input of the sine wave synthetizer 134.

The squaring and symmetrizing circuit 132 supplies the second input of the synthetizer 134 with a square wave signal having a frequency equal to f/4, i.e. 100 times higher than the signal supplied at the first input.

The said synthetizer 134 that receives these two square wave signals having a substantially fixed frequency ratio, generates a signal having a frequency that follows the speed of rotation of the shaft and therefore of the body or ferrule 12 and phase angle connected to the division supplied by the divisor 120, said phase angle remaining constant on varying of the speed of rotation of the body or ferrule 12 and consequently on varying of the frequency f, permitting thus a better elasticity of working that requires very small interventions of an operator to maintain a phase angle that with analogue phase shifting nets would vary on varying of the frequency connected to the rotation of the body or ferrule 12.

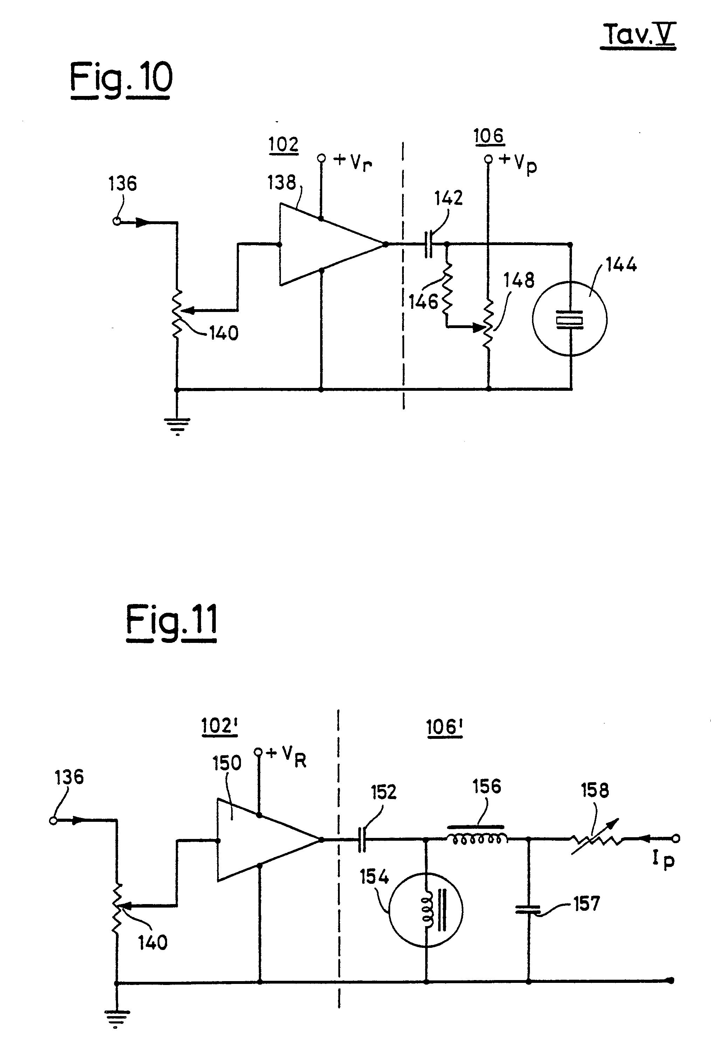

In the end the figure 10 shows a control circuit 102 of a piezoelectric transducer constituted by an amplifier 138 which receives an input signal, said signal being the output sinusoidal signal 136 coming from the synthetizer 134 of figure 9, the amplitude of said signal being adjusted by a potentiometer 140.

The signal coming out of the pilot amplifier 138 entries in a polarization adjusting circuit 106 through a coupling condenser 142 to a piezoelectric transducer 144 on which a direct voltage $+V_p$ adjustable by means of a potentiometer 148 is applied through a resistor 146, said potentiometer 148 allows the transducer 144 to apply a continuous and adjustable thrust to the transducer 144 to obtain micrometric position adjustments of the free end of the body or ferrule 12.

Figure 11 shows a circuit 102′ for guiding a magnetostrictive transducer constituted by an amplifier 150 which receives the output signal 136 of the synthetizer 134 of figure 9 whose amplitude is regulated by the potentiometer 140 and guides into a polarization adjusting circuit 106' through a coupling condenser 152 a magnetostrictive transducer 154 which receives also, through an alternate current block filter, constituted by an inductor 156 and a condenser 157, a direct current of polarization $I_p$, adjustable by means of a variable resistor 158 having the same purpose as the voltage of polarization +Vp applied to the piezoelectric transducer 144.

To tell the truth, this solution which foresees the magnetostrictive transducer 154 is less preferred than that which foresees the piezoelectric transducer 144 because the direct current of polarization Ip can produce in the transducer 154 a heating not always easily controllable.

This drawback could be overcome by providing inside said magnetostrictive transducer a permanent magnete having an adjustable position to give the desired force of polarization to the transducer, but also this solution can be not very convenient and not easy practicable.

A not represented alternative embodiment differs from the previously disclosed one only for the fact that the shaft 22 (figure 5) is formed by two half-shafts arranged in series and connected to each other by means of an elastic joint.

Another alternative embodiment not shown too differs from that described and illustrated in the figures for the fact that the shaft 22 (figure 5) is formed by three half-shafts arranged in series and connected to one another by elastic joints.

Both the alternative embodiments with respect to that in which the shaft 22 (figure 5) is elastic allow a greater versatility in the realization, at the end of any whatsoever body, of surfaces of revolution with axis aligned with any predetermined longitudinal axis of said body since the interval in which the longitudinal axis of the body can be chosen is wider.

In particular the alternative embodiment in which the shaft 22 (figure 5) is substituted for the three half-shafts connected to each other by articulated joints allows to realize at the end of one same body also a plurality of surfaces of revolution placed side by side, each one being aligned in a substantially perfect manner with its own predetermined longitudinal axis.

Moreover in both the alternative embodiments in which the shaft is articulated, the mechanism for the compensation of the oscillations, which is identical to that described for the elastically flexible shaft, is arranged on the half-shaft which is integral with the mandrel to which the body is connected.

According to an alternative embodiment of the case in which the articulated shaft is formed by three half-shafts, the intermediate one has also a variable length, for instance thanks to the presence in the same of a telescopic element. Also the mechanism for the compensation of the oscillations comprises preferably two bearings, each one of said bearings being associated to means 84, 86 generating oscillations and previously described.

A further alternative embodiment not shown too, differs from those previously disclosed for the fact that instead of making pass the ray of light in the through hole of the body or ferrule, the ray of light is reflected on at least a part of the end face of the body where it is intended to realize a surface of revolution. Clearly this alternative embodiment is useful in the case in which the body under working is devoid of the through hole in correspondence of the predetermined axis that must be aligned with the axis of the surface of revolution made in the body itself.

What has been illustrated is only one embodiment of the present invention and the skilled in the art could make several variations or substitutions equivalent completely or in part to the means used to be considered here all protected.

## Claims

1. Method for manufacturing a body (12) provided at one end with a surface of revolution (30) having the axis aligned with a predetermined longitudinal axis of said body, characterized by the fact that said alignment is obtained by applying in a projecting manner said body (12) on a mandrel (52) arranged at the end of a rotating shaft (22) chosen between an elastically flexible shaft and an articulated shaft for the presence in the same of at least an elastic joint letting freely oscilate the free end of said body (12) where it is intended to obtain said surface of revolution (30) and compensating the said free oscillations of said end with opposed oscillations imposed and adjusted at such an amplitude as to minimize or even substantially to eliminate said free oscillations.

2. Method as in claim 1, characterized by the fact that said compensating oscillations are synchronized with the rotation of said body (12) so that their frequency coincides with the angular velocity of said body (12), have their phase shifted empirically up to be opposed to the free oscillations and in the end are adjusted in amplitude, always empirically, up to reduce to the minimum or substantially to annul the same free oscillations.

3. Method as in claim 2, characterized by the fact that the said compensating oscillations are generated along at least two different directions lying on a plane perpendicular to the axis of rotation of said body (12).

4. Method as in claim 3, characterized by the fact that said two different directions are chosen mutually perpendicular.

5. Method as in claims 3 and 4, characterized by the fact that in order to have the said synchronization of the compensating oscillations with the rotation of the body (12) it is provided to detect the angular velocity of the body (12) obtaining an alternate frequency signal proportional to said angular velocity, to divide said signal into two signals which are sent to two distinct phase adjusters (99, 101) which regulate in advance or later, by choice, the phase of said two signals, to regulate the amplitude of the two signals whose phase has been adjusted and to transform the said electric signals into mechanical oscillations to be opposed to the free oscillations existing in said body (12).

6. Method as in the preceeding claims, characterized by the fact that to detect the presence of oscillations in the free end of said body (12) it is made use of a light ray made pass across a through hole (16) previously formed along the predetermined axis of said body and made incise on an optical detector (70) which takes into account of the positions assumed by said ray coming out of said through hole.

7. Method as in the preceeding claims, characterized by the fact that to detect the presence of oscillations in the free end of said body (12) it is made use of a ray of light made reflect on at least part of the face of the free end of said body in which it is intended to realize the surface of revolution (30), said reflected ray of light being made incise on an optical detector (70) which takes into account of the positions assumed by said reflected ray of light.

8. Method as in claims 6 and 7, characterized by the fact that the detector position of the ray coming out of said through hole (16) and/or of the ray of reflected light is carried out by means of a projection on a screen (64) that can be observed through a direct optical examination.

9. Method as in claim 8, characterized by the fact that the detector position of the ray coming out of said through hole (16) and/or of the ray of reflected light is carried out by means of a projection on a screen that can be observed through an examination with optical equipments.

10. Method as in claim 9, characterized by the fact that the detector position of the ray coming out of the through hole (16) and/or of the ray of reflected light is carried out by means of a projection on a screen (64) that can be observed through an examination with optical-electronic equipments.

11. Method as in claims from 6 to 10, characterized by the fact that the projected image of the light ray coming out of the through hole and/or of the ray of reflected light is measured to value the oscillations of the free end of the cylindrical body (12) and the phase and amplitude of the compensating signals are modified along the two directions perpendicular to each other and perpendicular to the axis of rotation of the said body (12) up to have the dimensions of said image projected with the body under rotation substantially equal to those of the image projected with the body (12) still, the reduction of said projected image to said dimensions indicating the achievable compensation of the oscillations of the free end of the body (12) and therefore the possibility of centering and aligning as better as possible a surface of revolution (30) with respect to the predetermined longitudinal axis of said body.

12. Apparatus for manufacturing a body provided at one end with a surface of revolution (30) whose axis is aligned with a predetermined longitudinal axis of said body (12), characterized by the fact of comprising a mechanism (88) for the compensation of oscillations to be applied around an assembly comprising a mandrel (52) at the ends of a rotating shaft chosen between an elastically flexible shaft and an articulated shaft thanks to the presence in the same of at least an elastic joint and the body (12) secured in a projecting manner on said mandrel, said mechanism (88) comprising a bearing (110) surrounding a component of said assembly and a plurality of means (84, 86) generating oscillations and positioned against said bearing (110) guided by signals deriving from the rotation of said assembly to provide phase and amplitude synchronization and compensation of the oscillations that the free end of said body (12) secured in a projecting manner on the mandrel suffers during the rotation to effect a working according to a surface of revolution whose axis coincides with the predetermined axis of said body at one end of this latter.

13. Apparatus as in claim 12, characterized by the fact that in the assembly comprising the mandrel (52) at the ends of an articulated shaft having the body (12) secured in a projecting manner on said mandrel, said shaft is formed by two rigid half-shafts arranged in series and connected to each other through an elastic joint interposed between them and that the mechanism for the compensation of the oscillations is arranged on the half-shaft to which the mandrel is secured.

14. Apparatus as in claim 12, characterized by the fact that in the assembly comprising the mandrel (52) at the end of an articulated shaft having the body (12) secured in a projecting manner on said mandrel, the shaft is formed by three rigid half-shafts arranged in series and connected to one another through interposed elastic joints and that the mechanism for the compensation of the oscillations is arranged on the half-shaft to which the mandrel (52) is secured, said mechanism for the compensation of the oscillations being constituted by at least two bearings surrounding in a position axially spaced along the axis of the rigid half-shaft to which the mandrel is secured, a plurality of means generating oscillations being associated to each bearing, said means being arranged against said bearings.

15. Apparatus according to claim 14, characterized by the fact that the intermediate half-shaft comprised between the elastic joints is of variable length.

16. Apparatus, as in claims 12, 13 and 14, characterized by the fact that said means (84, 86) generating oscillations are electromechanical transducers guided by amplifiers (138, 150) controlled by signals synchronized with the rotation of the body (12) whose phase is adjusted to lead the phase of the oscillations generated by the transducers in opposition to the phase of the oscillations themselves from the free end of the body (12) and whose amplitude is adjusted to cancel completely said own oscillations.

17. Apparatus, as in claim 16, characterized by the fact that the signals used to control the said amplifiers (138, 150) guiding the electromechanical transducers (84, 86) are generated by a rotation detector (82) associated to the shaft-mandrel body (12) assembly at the end of which it is intended to realize the operation according to a surface of revolution (30).

18. Apparatus as in claim 17, characterized by the fact that said rotation detector (82) consists of an electromagnetic detector generating a signal with a frequency proportional to the speed of rotation in said body (12).

19. Apparatus as in claim 17, characterized by the fact that the said rotation detector (82) consists of an optic-electronic detector generating said signal with a frequency proportional to the speed of rotation of said body (12).

20. Apparatus as in claim 17, characterized by the fact that the said rotation detector (82) consists of a proximity capacitive detector generating said signal with a frequency proportional to the speed of rotation of the said body (12).

21. Apparatus as in claims from 12 to 20, characterized by the fact that the phase regulation of the signals generated by one of the above rotation detectors takes place by means of phase shifting nets (98, 100) of adjustable type which emit an output phase shifted signal, with respect to an input signal, of an angle adjustable through the regulation of proper parameters of said nets.

22. Apparatus as in claim 21, characterized by the fact that said phase shifting nets (98, 100) are of analogue type and emit a substantially sinusoidal output signal whose frequency is proportional to the speed of rotation of said body (12) and whose phase is opposite to that of the oscillations to be compensated.

23. Apparatus as in claim 21, characterized by the fact that said phase shifting nets (98, 100) are of digital type and emit an output sinusoidal signal obtained by synthesis from digital signals whose frequency is proportional to the speed of rotation of the said body (12) and whose phase is opposite to that of the oscillations to be compensated.

24. Apparatus according to claim 22, characterized by the fact that said phase shifting nets (98, 100) of digital type are each one constituted by a frequency dividing counter (120) whose ratio of frequency division can be chosen by a coder (122) controllable by signals (124, 126) for the increase or the reduction of said division ratio and by a digital filter (134) which, from the ratio of the divided frequency signal with a synchronous signal at a frequency higher than a fixed ratio, synthetizes a sinusoidal signal whose phase is varied according to the ratio of frequency division given by the frequency dividing counter (120).

25. Apparatus as in claims from 16 to 24, characterized by the fact that said substantially sinusoidal signal controlling the amplifiers (138, 150) which guide the electromechanical transducers (84, 86) can be adjusted in amplitude to regulate the amplitude of the oscillations produced by said trasducers (84, 86).

26. Apparatus as in claim 25, characterized by the fact that the electromechanical transducers (84, 86) in addition to the substantially sinusoidal control signal are supplied with a constant polarization signal to determine their constant shifting for an end centering of said body (12) on the predetermined longitudinal axis of this latter when still.

27. Apparatus as in claim 26, characterized by the fact that if said electromechanical transducer is of piezoelectric type (144) the constant polarization signal is constituted by a direct voltage (+V) supplied by a generator of adjustable direct voltage.

25. Apparatus as in claim 26, characterized by the fact that if said electromechanical transducer is of magnetostrictive type (154) or of magnetodynamic type the constant polarization signal is constituted by a direct current (Ip) supplied by a generator of adjustable direct current.

29. Apparatus as in claims from 12 to 26, characterized by the fact that the electromechanical transducers (84, 86) used for the compensation of the free oscillations of the free end of the body (12) are in number of two arranged along two different directions.

30. Apparatus as in claim 29, characterized by the fact that the two said electromechanical transducers (84, 86) are arranged along two directions mutually perpendicular.

31. Apparatus as in claim from 12 to 30, characterized by the fact of using a light source (54) collimated with a through hole (16) of the body (12) previously made in correspondence of the predetermined longitudinal axis of this latter.

32. Apparatus as in claims from 12 to 30, characterized by the fact of using a light source made reflect on at least a part of the face of the free end of said body.

33. Apparatus as in claims 31 and 32, characterized by the fact of using also a screen (64) on which the ray of light coming out of said axial hole (16) and/or the ray of reflected light is projected.

34. Apparatus as in claim 33, characterized by the fact that said screen (64) is of semitransparent type so that a light spot (74) formed by the ray coming out of said axial hole (16) and/or by the ray of reflected light is visible on the screen itself.

35. Apparatus as in claim 34, characterized by the fact that said semitransparent screen (64) comprises also a graduated reticle (76) to enable to value the dimensions of the light spot (74) forming on it.

36. Apparatus as in claim 35, characterized by the fact that the graduated reticle (76) of said semitransparent screen (64) is lighted laterally with a light of colour different from that of the light ray coming out of the axial hole (16) and/or of the ray of reflected light to be completely distinguishable from the background of the screen (64) and by the light spot (74).

37. Apparatus as in claims from 32 to 36, characterized by the fact that the said screen (64) is placed in the range of an eyepiece for an examination by an operator who provides, through modifications of phase and amplitude of the compensating signals to said electromechanical transducers (84, 86) to reduce to the minimum the dimensions of the light spot on the screen (64) creating the conditions of very small oscillation of the free end of said body (12).

38. Apparatus as in claims from 33 to 36, characterized by the fact that said screen (64) is placed in the focus of a telecamera (70) which provides to send signals to a viewer of television type reproducing on a relatively big screen (72) the image of the light spot (74) to be valued by an operator of the apparatus.

39. Apparatus as in claim 38, characterized by the fact that the said telecamera (70) sends signals to an electronic processor (90) which provides to modify the phase and amplitude of signals controlling the electromechanical transducers (84, 86) for the compensation of the oscillations of the body (12).

P. 585

Tav.I

Fig.1

Fig.2

Fig.3

Fig.4

P. 585

Tav. II

## Fig.5

EP 0 379 165 A2

## Fig.6

## Fig.7

## Fig.8

**Fig.9**

EP 0 379 165 A2

P. 585

# Fig.10

# Fig.11